# FASCICULE DE BREVET EUROPEEN

(11) **EP 3 069 198 B1**
(45) Date de publication et mention de la délivrance du brevet: **20.12.2017**
(21) Numéro de dépôt: 14814917.2
(22) Date de dépôt: 12.11.2014
(51) Int. Cl.: G01C 11/02, H04N 5/341, H04N 5/225, G03B 37/04

(54) **APPAREIL PHOTOGRAPHIQUE A TRES HAUTE RESOLUTION ET A TRES GRANDE TAILLE D'IMAGE**
KAMERA MIT EINE SEHR HOHE AUFLÖSUNG UND EINE SEHR GROSSE BILDGRÖSSE
CAMERA HAVING VERY HIGH RESOLUTION AND A VERY LARGE IMAGE SIZE

(30) Priorité: 14.11.2013 FR 1361097
(43) Date de publication de la demande: 21.09.2016
(73) Titulaire: Imao, 87100 Limoges (FR)
(72) Inventeur: GIOLITO, Damien, F-75019 Paris (FR); MARDIVIRIN, David, F-87000 Limoges (FR)
(74) Mandataire: Fantin, Laurent
(86) Numéro de dépôt international: PCT/FR2014/052876
(87) Numéro de publication internationale: WO 2015/071588

(56) Documents cités:
- EP-A2- 0 519 719
- EP-A2- 0 840 502
- JP-A- 06 141 246
- US-A- 5 757 423
- US-A1- 2002 163 582
- US-A1- 2009 268 983
- US-A1- 2011 122 300

## Description

La présente invention se rapporte à un appareil photographique à très haute résolution, possédant une très grande taille d'image, particulièrement adapté pour l'acquisition d'images aériennes verticales, pour des applications de mesures géométriques aéroportées. De manière connue, un appareil photographique adapté pour de telles applications comprend un fût optique dans lequel est disposée au moins une chambre optique équipée d'une lentille optique et d'au moins un capteur matriciel.

Dans le domaine de la photogrammétrie aérienne, on utilise un appareil photographique installé dans un avion spécialement conçu, dont la structure a été adaptée pour comprendre un orifice, ménagé en partie inférieure du fuselage au droit duquel est positionné le fût optique de l'appareil photographique.

L'orifice réalisé dans le fuselage de l'avion peut-être circulaire, rectangulaire, carré ou plus complexe. Sur le plan dimensionnel, l'orifice a un diamètre ou un côté de l'ordre de 450 à 500 mm. La distance entre le plancher interne de l'avion et son fuselage externe, qui correspond à la hauteur de l'orifice, varie de 80 à 250 mm.

Quelle que soit sa forme, l'orifice permet d'y disposer un cylindre avec un diamètre compris entre 450 et 500 mm et une hauteur comprise entre 80 mm et 250 mm.

L'appareil photographique est placé au niveau du plancher de l'avion. Il est fixé sur une plateforme stabilisée en inclinaison, mobile en rotation suivant trois axes, afin de compenser le désalignement de l'avion par rapport à sa position de vol idéale en raison notamment de l'environnement de navigation (vents, altitudes, etc.)

En fonctionnement, le fût optique de l'appareil photographique est mobile dans l'orifice de l'avion et effectue des mouvements appelés par la suite mouvements de gyrostabilisation inscrits dans un cône de l'ordre de 7° par rapport à la verticale.

Lors de ces mouvements de gyrostabilisation, le fût optique ne doit pas venir en contact avec le bord périphérique de l'orifice et le champ de vue optique de l'appareil ne doit pas être interrompu par ce bord périphérique ou par toute autre partie de l'avion.

Par conséquent, le fût optique doit avoir un diamètre de 350 mm maximum, inférieur à celui de l'orifice. De plus, le fût optique doit avoir une hauteur d'au moins 340 mm, supérieure à la hauteur de l'orifice qui varie de 80 à 250 mm, augmentée de la hauteur de la plateforme stabilisée de l'ordre de 190 mm et diminuée de l'ordre de 100 mm maximum pour permettre la non perturbation des champs optiques.

Ces contraintes dimensionnelles initiales concernant le fût optique constituent une première limite si on cherche à améliorer les performances de l'appareil photographique, notamment en matière de dimensions d'image et de résolution.

Par ailleurs, l'amélioration des performances est également contrainte par des limitations technologiques. Ainsi, l'acquisition des images est réalisée à l'aide de capteurs matriciels de type CCD (pour Charged Coupled Device en anglais).

Les caractéristiques du capteur matriciel doivent être cohérentes avec celles de la lentille optique. Par conséquent, améliorer les performances des capteurs matriciels impose d'améliorer celles des lentilles, ce qui induit un développement propre pour les lentilles complexe, délicat et coûteux. Or, les lentilles de l'art antérieur proposent des performances limitées pour la photographie de très grand format (avec un cercle d'image inférieur ou égal à 150 mm), avec des fonctions de transfert en modulation très faible (inférieures à 20%) pour des pouvoirs de résolution n'excédant pas 40 pl/mm (paire de lignes par millimètre).

En matière d'appareil photographique à capteurs matriciels, il existe des appareils qui comprennent chacun plusieurs lentilles et un seul capteur matriciel associé à chaque lentille. Ce type d'appareil permet d'atteindre une résolution de l'ordre de 250 Mégapixels au maximum.

On connait d'après le document WO2007/014293, correspondent au document US 2009/0268983 A1, un appareil comprenant plusieurs chambres optiques avec chacune une lentille et plusieurs capteurs matriciels. Selon ce document, une image finale est composée de sous-images élémentaires issues chacune d'un capteur matriciel, qui sont assemblées grâce à un traitement informatique.

Dans ce document, selon un mode de réalisation, l'appareil comprend quatre chambres optiques avec chacune une lentille et quatre capteurs matriciels. Les chambres optiques ont des axes parallèles et décalés entre eux. Les capteurs matriciels sont décalés par rapport aux axes, d'une chambre à l'autre, de manière à saisir chacun une partie de la zone photographiée. Ainsi, chaque capteur matriciel saisit une partie de la zone photographiée qui correspond à une sous-image. Les sous images sont toutes différentes et permettent grâce à un traitement informatique de reconstituer une image qui correspond à la surface totale photographiée.

Comme pour les appareils comprenant plusieurs lentilles et un seul capteur matriciel par lentille, ce type d'appareil comprenant plusieurs lentilles et plusieurs capteurs matriciels par lentille est limité actuellement à une résolution maximale de 250 Mégapixels. Selon cette conception, pour augmenter la taille des images, une solution consiste à attendre que la technologie des capteurs matriciels CCD propose des photosites plus petits. Cependant, une réduction des dimensions des photosites a pour effet de diminuer la sensibilité des capteurs matriciels qui est nécessaire à la qualité d'image destinée à un usage photogrammétrique.

La présente invention vise à améliorer les performances d'un appareil photographique comprenant plusieurs chambres optiques avec chacune une lentille et plusieurs capteurs matriciels.

A cet effet, l'invention a pour objet un appareil photographique selon la rev. indépendante 1. La combinaison de ses caractéristiques conduit à optimiser l'élargissement de la surface de l'image de la zone photographiée.

D'autres caractéristiques et avantages ressortiront de la description qui va suivre de l'invention, description donnée à titre d'exemple uniquement, en regard des dessins annexés sur lesquels :

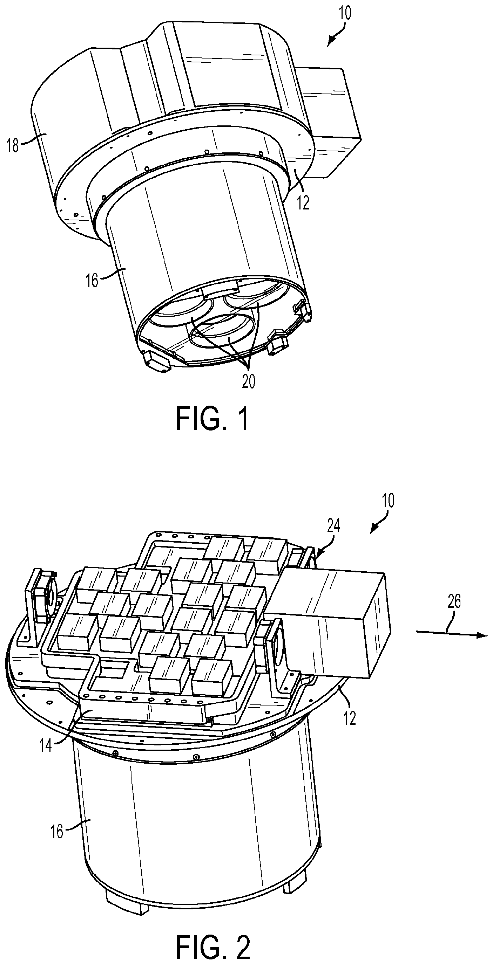

- La figure 1 est une vue en perspective d'un appareil photographie qui illustre l'invention,
- La figure 2 est une vue de l'appareil de la figure 1 qui illustre l'agencement des capteurs matriciels,

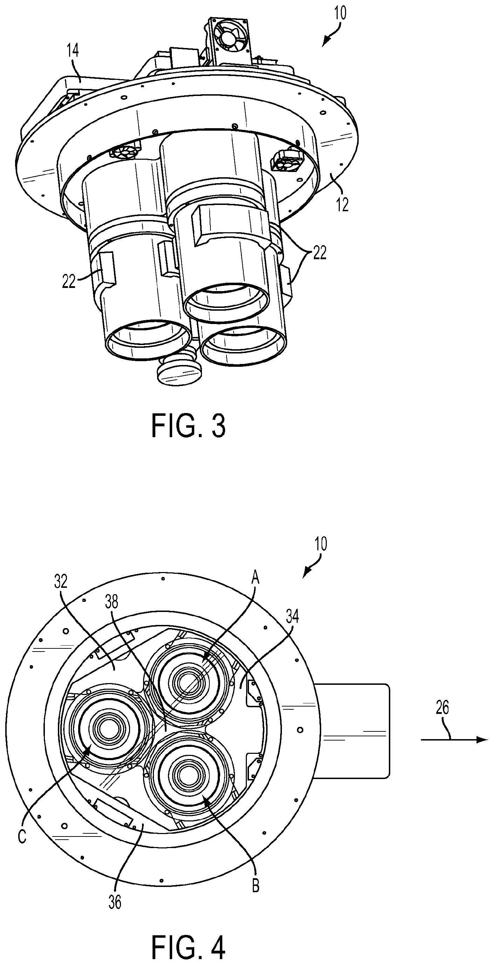

- La figure 3 est une vue de l'appareil de la figure 1 sans capot qui illustre les trois chambres optiques,
- La figure 4 est une vue de dessous de l'appareil de la figure 1,
- La figure 5 est un schéma illustrant la disposition des trois chambres optiques d'un appareil photographique selon l'invention,
- La figure 6 est un plan indiquant la position relative des capteurs matriciels des trois chambres optiques selon l'invention, et
- La figure 7 est une vue d'une image reconstituée à partir des sous images saisies par les capteurs matriciels.

Sur les figures, on a représenté en 10 un appareil photographique. Ce dernier est plus particulièrement adapté pour réaliser des images aériennes verticales d'une zone photographiée.

Il comprend un châssis médian 12 par exemple sous la forme d'un anneau qui supporte en partie inférieure plusieurs chambres optiques A, B, C et en partie supérieure un plateau 14 supportant des capteurs matriciels.

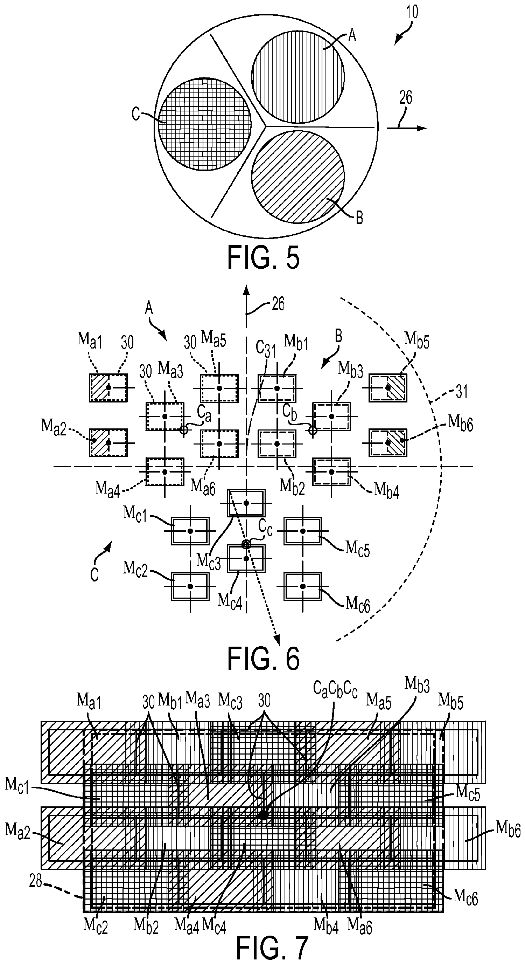

Le châssis médian 12 est susceptible d'être solidarisé à la structure d'un aéronef, directement ou via l'intermédiaire d'une plateforme de gyrostabilisation ou de stabilisation, par tout moyen approprié de manière à ce que les chambres optiques A, B, C soient disposées au droit d'un orifice 31 (voir figure 6) ménagé dans la structure de l'aéronef. L'appareil photographique comprend un capot inférieur 16, appelé également fût optique, entourant les chambres optiques, de forme approximativement cylindrique et solidarisé de manière démontable au châssis médian 12. Compte tenu des dimensions de l'orifice 31, le fût optique doit avoir un diamètre inférieur ou égal à 350 mm et une hauteur de l'ordre de 340 mm.

Il comprend également un capot supérieur 18 qui entoure le plateau 14, de forme approximativement cylindrique et solidarisé de manière démontable au châssis 12.

Chaque chambre optique A, B, C est délimitée par une paroi sous la forme d'un conduit approximativement cylindrique et comprend une lentille 20, un obturateur 22 et des capteurs matriciels M.

De manière connue, chaque chambre optique comprend un système d'obturation optique qui permet de générer une totale obscurité dans la chambre optique entre deux acquisitions d'image et une ouverture pendant un temps d'exposition durant lequel la lumière se dépose sur les éléments des capteurs matriciels M.

De préférence, les obturateurs 22 sont de type mécanique. Ces obturateurs ont une ouverture pouvant varier de l'ordre de 1 à 30 mm et une vitesse d'obturation de l'ordre de 2 millisecondes à 1 seconde.

L'appareil comprend un moyen pour compenser le mouvement d'avance de l'avion (matérialisé par la flèche 26) et plus précisément le filé.

Selon un mode de réalisation, le plateau 14 est relié au châssis par une liaison 24 qui comprend une platine mobile et un système de guidage en translation, comme des rails par exemple. Un système motorisé permet de générer le mouvement en translation de la platine le long du système de guidage. Ce système motorisé permet un positionnement en translation avec une précision inférieure au micron.

Avantageusement, pour chaque chambre optique, la lentille 20 a un grand cercle d'image supérieur à 200 mm, de préférence supérieur à 220 mm.

Cette caractéristique a pour effet de maximiser la résolution de l'appareil, notamment en augmentant le nombre de pixels qui est proportionnel au cercle d'image, pour une taille de photosite donnée.

Compte tenu des dimensions des photosites retenues de 6 µm, une taille d'image totale souhaitée de 30000 x 22000 pixels correspond, avec une chambre optique unique, à une surface photosensible de 180 mm x 132 mm, soit une diagonale de l'ordre de 220 mm. Par conséquent, pour une taille d'image totale souhaitée de 30000 x 22000 pixels, il est impératif que les lentilles respectent à minima un cercle d'image de 220 mm. Avantageusement, pour chaque chambre optique la lentille 20 a un taux de transfert en modulation de l'ordre de 40 % pour un pouvoir de résolution de 42 pl/mm à une distance de 110 mm du centre de l'image. Cette caractéristique a pour effet de permettre une bonne transmission de l'image par les lentilles vers les capteurs matriciels, avec un bruit optique et des perturbations suffisamment faibles.

Avantageusement, pour chaque chambre optique, la lentille 20 a un diamètre extérieur inférieur ou égal à 135 mm.

Cette caractéristique a pour effet de permettre le positionnement de trois chambres optiques A, B, C dans le fût optique 16 (de diamètre inférieur ou égal à 350 mm), leurs assemblages et l'ajout des systèmes d'obturation optique.

Avantageusement, pour chaque chambre optique, la lentille 20 comprend un assemblage mécanique avec une distance entre le port d'entrée optique et le plan focal supérieure ou égale à 373 mm, soit une distance supérieure à la hauteur du fût optique de l'ordre de 340 mm. Cet agencement permet d'obtenir une surface image obtenue à partir des trois lentilles combinées plus importante que le diamètre du fût optique.

Par port d'entrée optique, on entend la face optique de la lentille qui reçoit la lumière depuis l'extérieur, à travers un cône correspondant au champ optique.

Avantageusement, pour chaque chambre, la distance focale de la lentille est supérieure ou égale à 185 mm.

Généralement, un dispositif d'acquisition d'image aérienne est utilisé avec un champ de vue inférieur ou égal à 60°. Ce point correspond à l'optimisation de la couverture de mesure avec la précision des données, qui s'affaiblit avec un angle d'incidence trop important supérieur à 30°.

Dans la mesure où le champ de vue doit être inférieur ou égal à 60°, le fait de choisir une distance focale supérieure ou égale à 185 mm permet d'avoir un cercle d'image supérieur ou égal à 200 mm qui permet de pouvoir disposer de l'ordre de 600000 pixels avec un taille de pixel de 6 µm.

Selon un mode de réalisation, la distance focale de la lentille est de l'ordre de 185 mm. Cette valeur découle d'un compromis entre les contraintes dimensionnelles de construction des lentilles et le cercle d'image des lentilles qui doit rester supérieur à 200 mm.

Les capteurs matriciels M peuvent être des capteurs de type CCD (Charge Coupled Device) ou CMOS (Complementary Metal Oxide Semiconductor).

Selon un mode de réalisation privilégié, les capteurs matriciels M sont de type CCD.

Les capteurs matriciels CCD sont préférés aux capteurs matriciels CMOS car en l'état ils possèdent une bien meilleure sensibilité et ils sont de plus grandes tailles.

Selon un mode de réalisation privilégié, chaque capteur matriciel a une diagonale de l'ordre de 61,3 mm et des photosites de 6 µm.

Ce choix est un compromis entre les performances d'acquisition du capteur et la résolution finale des images. En effet, un choix de photosites plus petits impliquerait une diminution de la sensibilité de détection lumineuse et une augmentation des performances des lentilles optiques.

Chaque capteur matriciel M permet de saisir une sous-image de la zone photographiée comme illustré sur la figure 7. Une image 28 de la zone photographiée (en trait mixte sur la figure 7) est reconstituée à partir des sous-images à l'aide d'un traitement informatique. Comme illustré sur la figure 7, les sous images sont disposées les unes à côté des autres avec des zones de chevauchement au niveau de leurs bords. Ces zones de chevauchement sont utilisées par le traitement informatique afin de positionner les sous-images les unes par rapport aux autres, au pixel près, de manière à former l'image 28. Le traitement informatique n'est pas plus décrit car il est connu de l'homme du métier.

Chaque sous image comprend une partie centrale 30 rectangulaire, l'image 28 correspondant à la juxtaposition bord à bord desdites parties centrales 30 des sous images. Les zones de chevauchement des sous-images permettent de faire l'assemblage de l'image finale par le traitement informatique. A titre indicatif, les zones de chevauchement ont une largeur variant de 700 à 900 pixels.

Chaque capteur matriciel M comprend une surface photosensible recouverte de photosites, ladite surface photosensible étant capable de capter une sous image. Cette surface photosensible est sensiblement rectangulaire. Avantageusement, les surfaces photosensibles sont coplanaires. Selon un mode de réalisation, elles doivent être disposées sur une surface avec une planéité de l'ordre de 50 µm de manière à ce que tous les photosites puissent être positionnés approximativement dans un même et unique plan correspondant au plan focal des lentilles 20.

Selon une caractéristique de l'invention, les capteurs matriciels permettent de capter une sous image rectangulaire de l'ordre de 49,1 mm x 36,8 mm, soit une résolution de 8176 x 6132 pixels.

Chaque capteur matriciel comprend un boitier qui intègre la surface photosensible. Ce boitier a des dimensions extérieures de l'ordre de 60 mm x 50 mm supérieures à celles de la surface photosensible, ce qui empêche la continuité des surfaces photosensibles des différents capteurs. Par conséquent, il est nécessaire de prévoir plusieurs chambres optiques qui visent la même scène, qui comprennent chacune plusieurs capteurs matriciels qui saisissent des sous-images SI qui sont assemblées à l'aide d'un traitement informatique de manière à obtenir l'image de la scène photographiée.

Selon une caractéristique de l'invention, les capteurs matriciels ont un rapport entre les dimensions de la surface photosensible et les dimensions externes du boitier qui n'excède pas 1,5 et qui est de préférence inférieur à 1,3.

Selon un mode de réalisation privilégié, les capteurs matriciels sont des capteurs CCD avec des surfaces photosensibles avec un filtre de Bayer. Cette solution a pour avantage de restituer directement la couleur par dématriçage de l'image brute. Elle se distingue des appareils existants qui utilisent des capteurs matriciels CCD panchromatiques pour obtenir une image native ou des capteurs matriciels CCD avec un filtre de couleur dont la résolution est plus faible, ce qui a pour effet de dégrader la couleur.

Selon un autre avantage, l'utilisation de capteurs matriciels CCD avec un filtre de Bayer permet de réduire le pouvoir de résolution à 42 pl/mm pour le rouge et le bleu et à 59 pl/mm pour le vert alors qu'un capteur matriciel CCD avec des photosites de 6 µm a un pouvoir de résolution natif de 84 pl/mm. Ainsi, les capteurs matriciels ont des caractéristiques cohérentes avec les lentilles. Une lentille avec un pouvoir de résolution de 42 pl/mm avec une fonction de transfert en modulation de 40 % transmettra une image nette aux capteurs matriciels.

Selon une caractéristique essentielle de l'invention, l'appareil photographique 10 comprend trois chambres optiques A, B et C avec chacune une lentille à grand cercle d'image et plusieurs capteurs matriciels M répartis en quinconce, l'agencement des capteurs matriciels dans les trois chambres étant tel que les sous images SI produites par les capteurs matriciels sont disposées les unes à côté des autres avec des zones de chevauchement au niveau de leurs bords pour obtenir l'image 28 de la zone photographiée.

La combinaison des caractéristiques relatives à la longueur focale des lentilles supérieure ou égale à 185 mm, au nombre de chambres optiques égal à trois et à l'agencement des capteurs matriciels de chaque chambre optique conduit à optimiser l'élargissement de la surface photographique de l'image 28.

Les centres des chambres optiques A, B, C cylindriques sont disposés au niveau des sommets d'un triangle équilatéral. Le centre d'une chambre optique correspond à l'intersection de l'axe optique de la chambre optique avec le plan des surfaces photosensibles des capteurs matriciels M.

Cet agencement permet d'obtenir une image 28 la plus grande possible avec un encombrement réduit permettant de prendre des images à travers l'orifice de l'aéronef 31 qui a un diamètre ou un côté de l'ordre de 450 à 500 mm.

Selon un autre aspect, le fait de prévoir un appareil photographique 10 avec trois chambres optiques A, B, C permet d'obtenir une qualité optique pour la lentille et une qualité numérique pour les capteurs matriciels cohérentes.

Le fait de limiter le nombre de chambres optiques à trois permet de limiter les effets parasites dus aux différences d'une chambre optique à l'autre (différence de distorsions, de fonction de transfert de modulation (MTF pour Modulation Transfer Function en anglais), de pouvoir de résolution, d'aberration chromatique, etc...)

Le fait de prévoir trois chambres optiques offre la possibilité de pouvoir intégrer jusqu'à quatre capteurs supplémentaires, trois capteurs dans les zones 32, 34, 36, entre deux chambres optiques et à l'extérieur desdites chambres et un quatrième capteur dans la zone 38, entre les trois chambres optiques.

Selon un autre avantage, cet agencement permet d'obtenir un cercle d'image et un nombre de photosites maximal.

Selon un mode de réalisation privilégié, chaque chambre optique comprend six capteurs matriciels M.

De manière non limitative, avec trois chambres optiques disposant chacune de six capteurs matriciels, il est possible d'atteindre une résolution de 660 Mégapixels.

Pour la chambre A, les capteurs matriciels sont référencés Ma1, Ma2, Ma3, Ma4, Ma5 et Ma6.

Pour la chambre B, les capteurs matriciels sont référencés Mb1, Mb2, Mb3, Mb4, Mb5 et Mb6.

Pour la chambre C, les capteurs matriciels sont référencés Mc1, Mc2, Mc3, Mc4, Mc5 et Mc6.

Pour chaque chambre, les capteurs sont disposés en quinconce.

Pour la suite de la description, une rangée correspond à un alignement perpendiculaire à la direction d'avance 26. Une colonne correspond à un alignement parallèle à la direction d'avance 26.

Pour la chambre A, les capteurs Ma1 et Ma5 sont répartis sur une première rangée, le capteur Ma3 sur une deuxième rangée, les capteurs Ma2 et Ma6 sur une troisième rangée et le capteur Ma4 sur une quatrième rangée.

Les rangées ont une largeur inférieure à la largeur de la surface photosensible d'un capteur matriciel M pour obtenir des zones de recouvrement entre les surfaces photosensibles (comme illustré sur la figure 7).

Les capteurs Ma1 et Ma2 sont alignés selon une première colonne, les capteurs Ma3 et Ma4 sont alignés selon une deuxième colonne et les capteurs Ma5 et Ma6 sont alignés selon une troisième colonne.

Les colonnes ont une largeur inférieure à la longueur de la surface photosensible d'un capteur matriciel M, et sont espacées d'une distance telle que les surfaces photosensibles des capteurs matriciels soient séparées d'une distance inférieure à 49/2 mm entre deux colonnes pour obtenir des zones de recouvrement entre les surfaces photosensibles (comme illustré sur la figure 7).

Pour la chambre B, les capteurs Mb1 et Mb5 sont répartis sur une première rangée, le capteur Mb3 sur une deuxième rangée, les capteurs Mb2 et Mb6 sur une troisième rangée et le capteur Mb4 sur une quatrième rangée.

Les rangées ont une largeur inférieure à la largeur de la surface photosensible d'un capteur matriciel M pour obtenir des zones de recouvrement entre les surfaces photosensibles (comme illustré sur la figure 7).

Les capteurs Mb1 et Mb2 sont alignés selon une première colonne, les capteurs Mb3 et Mb4 sont alignés selon une deuxième colonne et les capteurs Mb5 et Mb6 sont alignés selon une troisième colonne.

Les colonnes ont une largeur inférieure à la longueur de la surface photosensible d'un capteur matriciel M, et sont espacées d'une distance telle que les surfaces photosensibles des capteurs matriciels soient séparées d'une distance inférieure à 49/2 mm entre deux colonnes pour obtenir des zones de recouvrement entre les surfaces photosensibles (comme illustré sur la figure 7).

Pour la chambre C, le capteur Mc3 est disposé selon sur une première rangée, les capteurs Mc1 et Mc5 sur une deuxième rangée, le capteur Mc4 sur une troisième rangée et les capteurs Mc2 et Mc6 sur une quatrième rangée.

Les rangées ont une largeur inférieure à la largeur de la surface photosensible d'un capteur matriciel M pour obtenir des zones de recouvrement entre les surfaces photosensibles (comme illustré sur la figure 7).

Les capteurs Mc1 et Mc2 sont alignés selon une première colonne, les capteurs Mc3 et Mc4 sont alignés selon une deuxième colonne et les capteurs Mc5 et Mc6 sont alignés selon une troisième colonne.

Les colonnes ont une largeur inférieure à la longueur de la surface photosensible d'un capteur matriciel M, et sont espacées d'une distance telle que les surfaces photosensibles des capteurs matriciels soient séparées d'une distance inférieure à 49/2 mm entre deux colonnes pour obtenir des zones de recouvrement entre les surfaces photosensibles (comme illustré sur la figure 7).

Les centres Ca et Cb des chambres optiques A et B sont disposés sur une droite perpendiculaire à la direction d'avance 26.

Le centre Ca est disposé à proximité de l'angle de la surface photosensible du capteur Ma3, prévu au niveau de la limite entre les deuxième et troisième rangées et au niveau de la limite de la deuxième colonne proche de la troisième colonne.

Le centre Cb est disposé à proximité de l'angle de la surface photosensible du capteur Mb3, prévu au niveau de la limite entre les deuxième et troisième rangées et au niveau de la limite de la deuxième colonne proche de la première colonne.

Le centre Cc est disposé à proximité du milieu du côté de la surface active du capteur Mc4, prévu au niveau de la limite des deuxième et troisième rangées.

Selon un mode de réalisation, le centre Cc est disposé sur la droite parallèle à la direction d'avance 26, passant par le centre C31 de l'orifice 31. Les centres Cc et C31 sont séparés d'une distance de l'ordre de 67 mm.

Par centre C31, on entend le centre d'un cercle lorsque l'orifice 31 est circulaire et l'intersection des diagonales lorsque l'orifice 31 est carré ou rectangulaire.

Avantageusement, les centres optiques des trois chambres optiques sont disposés de manière à ce que le centre C31 de l'orifice 31 soit disposé au niveau du centre de gravité du triangle équilatéral formé par les centres optiques des trois chambres optiques. Ainsi, les centres Ca, Cb, Cc sont équidistants du centre C31. Cette configuration permet d'optimiser la répartition des masses sur le plateau 14 et le positionnement des chambres optiques dans le fût optique.

Les centres Ca et Cb sont sensiblement symétriques par rapport à la droite parallèle à la direction d'avance 26, passant par le centre C31.

Selon cet agencement, les moitiés des capteurs Ma1, Ma2, Mb5 et Mb6 les plus éloignées de la droite parallèle à la direction d'avance 26, passant par le centre C31, ne sont pas utilisées pour reconstituer l'image 28.

Comme illustré sur la figure 7, l'image 28 comprend quatre rangées de sous images SI. En partant du haut, la première rangée comprend de gauche à droite les sous images des capteurs Ma1, Mb1, Mc3, Ma5, Mb5 (seule une moitié des sous images des capteurs Ma1 et Mb5 étant utilisée), la second rangée comprend de gauche à droite les sous images des capteurs Mc1, Ma3, Mb3, Mc5, la troisième rangée comprend de gauche à droite les sous images des capteurs Ma2, Mb2, Mc4, Ma6 et Mb6 (seule une moitié des sous images des capteurs Ma2 et Mb6 étant utilisée), la quatrième rangée comprend les sous images des capteurs Mc2, Ma4, Mb4, Mc6.

L'invention permet d'obtenir un appareil photographique à très haute résolution et à grande taille d'image, adapté aux dimensions réduites d'un orifice d'un avion de photographie aérienne, malgré les contraintes suivantes :
- L'encombrement des électroniques autour des surfaces photosensibles,
- La possibilité physique de créer des lentilles optiques de petite taille possédant un cercle d'image et un pouvoir de résolution suffisants pour être adapté aux applications photogrammétriques,
- La nécessité d'utiliser pour les surfaces photosensibles des photosites avec une taille acceptable pour procurer à l'image une sensibilité recherchée.

## Revendications

1. Appareil photographique pour l'acquisition d'images aériennes verticales, comprenant plusieurs chambres optiques (A, B, C) avec chacune une lentille et plusieurs capteurs matriciels (M), **caractérisé en ce qu'**il comprend uniquement trois chambres optiques (A, B, C) dont les centres (Ca, Cb, Cc) sont disposés aux sommets d'un triangle équilatéral, chaque chambre optique (A, B, C) comprenant :
- une lentille avec un grand cercle d'image et une distance focale supérieure ou égale à 185 mm, et
- plusieurs capteurs matriciels (M) disposés en quinconce, chaque capteur matriciel étant apte à capter une sous image (SI) d'une zone photographiée, lesdites sous images (SI) étant assemblées grâce à un traitement informatique de manière à obtenir une image (28) de la zone photographiée.

2. Appareil photographique selon la revendication 1, **caractérisé en ce que**, pour chaque chambre optique, la lentille (20) a un cercle d'image supérieur à 200 mm.

3. Appareil photographique selon la revendication 1 ou 2, **caractérisé en ce que**, pour chaque chambre optique, la lentille (20) est agencée de manière à ce que la distance entre le port d'entrée optique et le plan focal soit supérieure ou égale à 373 mm.

4. Appareil photographique selon l'une des revendications précédentes, **caractérisé en ce que**, pour chaque chambre optique, la lentille (20) a un taux de transfert en modulation de l'ordre de 40 % pour un pouvoir de résolution de 42 pl/mm à une distance de 110 mm du centre de l'image.

5. Appareil photographique selon l'une des revendications précédentes, **caractérisé en ce que** chaque chambre optique comprend six capteurs matriciels (M).

6. Appareil photographique selon l'une des revendications précédentes, **caractérisé en ce que** les capteurs matriciels (M) sont de type CCD.

7. Appareil photographique selon la revendication 6, **caractérisé en ce que** chaque capteur matriciel a une diagonale de l'ordre de 61,3 mm et des photosites de 6 µm.

8. Appareil photographique selon la revendication 6 ou 7, **caractérisé en ce que** les capteurs matriciels ont un rapport entre les dimensions de la surface photosensible et les dimensions externes du boitier du capteur qui n'excède pas 1,5.

9. Appareil photographique selon l'une des revendications 6 à 8, **caractérisé en ce que** les capteurs matriciels sont des capteurs de type CCD avec un filtre de Bayer.

10. Appareil photographique selon l'une des revendications précédentes, adapté pour la réalisation d'images aériennes verticales et disposé au droit d'un orifice (31) ménagé dans une structure d'un aéronef se déplaçant selon une direction d'avance (26), **caractérisé en ce que** les centres (Ca, Cb) d'une première chambre optique (A) et d'une deuxième chambre optique (B) sont disposés sur une droite perpendiculaire à la direction d'avance (26) et **en ce que** le centre (Cc) d'une troisième chambre (C) est disposé sur une droite parallèle à la direction d'avance (26) et passant par le centre de l'orifice (C31) de l'orifice (31).

11. Appareil photographique selon la revendication 10, **caractérisé en ce que** les centres (Ca, Cb, Cc) des trois chambres optiques (A, B, C) sont disposés à équidistance du centre (C31) de l'orifice (31).

12. Appareil photographique selon l'une des revendications précédentes, **caractérisé en ce que** la première chambre (A) comprend un premier capteur (Ma1) et un deuxième capteur (Ma2) alignés selon une première colonne, un troisième capteur (Ma3) et un quatrième capteur (Ma4) alignés selon une deuxième colonne et un cinquième capteur (Ma5) et un sixième capteur (Ma6) alignés selon une troisième colonne, le premier capteur (Ma1) et le cinquième capteur (Ma5) étant répartis sur une première rangée, le troisième capteur (Ma3) sur une deuxième rangée, le deuxième capteur (Ma2) et le sixième capteur (Ma6) sur une troisième rangée et le quatrième capteur (Ma4) sur une quatrième rangée, le centre (Ca) de la première chambre optique (A) étant disposé à proximité d'un angle de la surface photosensible du troisième capteur (Ma3), prévu au niveau de la limite entre les deuxième et troisième rangées et au niveau de la limite de la deuxième colonne proche de la troisième colonne.

13. Appareil photographique selon l'une des revendications précédentes, **caractérisé en ce que** la deuxième chambre (B) comprend un premier capteur (Mb1) et un deuxième capteur (Mb2) alignés selon une première colonne, un troisième capteur (Mb3) et un quatrième capteur (Mb4) alignés selon une deuxième colonne et un cinquième capteur (Mb5) et un sixième capteur (Mb6) alignés selon une troisième colonne, le premier capteur (Mb1) et le cinquième capteur (Mb5) étant répartis sur une première rangée, le troisième capteur (Mb3) sur une deuxième rangée, le deuxième capteur (Mb2) et le sixième capteur (Mb6) sur une troisième rangée et le quatrième capteur (Mb4) sur une quatrième rangée, le centre (Cb) de la deuxième chambre optique (B) étant disposé à proximité d'un angle de la surface active du troisième capteur (Mb3), prévu au niveau de la limite entre les deuxième et troisième rangées et au niveau de la limite de la deuxième colonne proche de la première colonne.

14. Appareil photographique selon l'une des revendications précédentes, **caractérisé en ce que** la troisième chambre (C) comprend un premier capteur (Mc1) et un deuxième capteur (Mc2) alignés selon une première colonne, un troisième capteur (Mc3) et un quatrième capteur (Mc4) alignés selon une deuxième colonne et un cinquième capteur (Mc5) et un sixième capteur (Mc6) alignés selon une troisième colonne, le troisième capteur (Mc3) étant sur une première rangée, le premier capteur (Mc1) et le cinquième capteur (Mc5) sur une deuxième rangée, le quatrième capteur (Mc4) sur une troisième rangée et le deuxième capteur (Mc2) et le sixième capteur (Mc6) sur une quatrième rangée, le centre (Cc) de la troisième chambre optique (C) étant disposé à proximité du milieu d'un côté de la surface active du capteur (Mc4), prévu au niveau de la limite des deuxième et troisième rangées.

## Patentansprüche

1. Kamera für die Aufnahme von Luftbildern aus der Senkrechen, die jeweils mehrere optische Kammern (A, B, C) mit jeweils einer Linse und mehreren Matrixsensoren (M) aufweist, **dadurch gekennzeichnet, dass** diese lediglich drei optische Kammern (A, B, C) aufweist, deren Zentren (Ca, Cb, Cc) auf den Ecken eines gleichseitigen Dreiecks angeordnet sind, wobei jede optische Kammer (A, B, C) versehen ist mit:
- einer Linse mit einem großen Bildkreis und einer Brennweite größer gleich 185 mm, und
- mehreren Matrixsensoren (M), die versetzt angeordnet sind, wobei jeder Matrixsensor dazu eingerichtet ist, ein Teilbild (SI) eines fotografierten Bereichs aufzunehmen, und wobei die Teilbilder (SI) mithilfe einer Datenverarbeitung zusammengesetzt werden, um auf diese Weise ein Bild (28) des fotografierten Bereichs zu erhalten.

2. Kamera nach Anspruch 1, **dadurch gekennzeichnet, dass** für jede optische Kammer die Linse (20) einen Bildkreis oberhalb von 200 mm hat.

3. Kamera nach Anspruch 1 oder 2, **dadurch gekennzeichnet, dass** für jede optische Kammer die Linse (20) derart ausgebildet ist, dass der Abstand zwischen der Eintrittsöffnung und der Fokalebene größer gleich 373 mm ist.

4. Kamera nach einem der vorhergehenden Ansprüche, **dadurch gekennzeichnet, dass** für jede optische Kamera die Linse (20) eine Kontrastübertragungsrate in der Größenordnung von 40 % bei einem Auflösungsvermögen von 42 Lp/mm in einer Entfernung von 110 mm vom Bildzentrum hat.

5. Kamera nach einem der vorhergehenden Ansprüche, **dadurch gekennzeichnet, dass** jede optische Kammer sechs Matrixsensoren (M) aufweist.

6. Kamera nach einem der vorhergehenden Ansprüche, **dadurch gekennzeichnet, dass** die Matrixsensoren (M) vom Typ CCD sind.

7. Kamera nach Anspruch 6, **dadurch gekennzeichnet, dass** jeder Matrixsensor eine Diagonale in der Größenordnung von 61,3 mm und Pixel in der Größenordnung von 6 µm hat.

8. Kamera nach Anspruch 6 oder 7, **dadurch gekennzeichnet, dass** die Matrixsensoren ein Verhältnis zwischen den Abmessungen der lichtempfindlichen Oberflächen und den äußeren Abmessungen des Sensorgehäuses haben, das 1,5 nicht übersteigt.

9. Kamera nach einem der Ansprüche 6 bis 8, **dadurch gekennzeichnet, dass** die Matrixsensoren Sensoren vom Typ CCD mit einem Bayerfilter sind.

10. Kamera nach einem der vorhergehenden Ansprüche, die zum Erstellen von Luftbildern aus der Vertikalen eingerichtet ist und gegenüber einer Öffnung (31) angeordnet ist, die in der Struktur eines Luftfahrzeugs ausgebildet ist, das sich in eine Bewegungsrichtung (26) bewegt, **dadurch gekennzeichnet, dass** die Zentren (Ca, Cb) einer ersten optischen Kammer (A) und einer zweiten optischen Kammer (B) auf einer Geraden angeordnet sind, die im rechten Winkel zur Bewegungsrichtung (26) ausgerichtet ist, und dass das Zentrum (Cc) einer dritten Kammer (C) auf einer Geraden angeordnet ist, die parallel zur Bewegungsrichtung (26) ausgerichtet ist und durch das Öffnungszentrum (C31) der Öffnung (31) verläuft.

11. Kamera nach Anspruch 10, **dadurch gekennzeichnet, dass** die Zentren (Ca, Cb, Cc) der drei optischen Kammern (A, B, C) im gleichen Abstand zum Zentrum (C31) der Öffnung (31) angeordnet sind.

12. Kamera nach einem der vorhergehenden Ansprüche, **dadurch gekennzeichnet, dass** die erste Kammer (A) mit einem ersten Sensor (Ma1) und mit einem zweiten Sensor (Ma2), die entlang einer ersten Spalte ausgerichtet sind, mit einem dritten Sensor (Ma3) und einem vierten Sensor (Ma4), die entlang einer zweiten Spalte ausgerichtet sind, und mit einem fünften Sensor (Ma5) und einem sechsten Sensor (Ma6), die entlang einer dritten Spalte ausgerichtet sind, versehen ist, wobei der erste Sensor (Ma1) und der fünfte Sensor (Ma5) über eine erste Zeile verteilt sind, der dritte Sensor (Ma3) auf einer zweiten Zeile, der zweite Sensor (Ma2) und der sechste Sensor (Ma6) auf einer dritten Zeile und der vierte Sensor (Ma4) auf einer vierten Zeile verteilt sind, und wobei das Zentrum (Ca) der ersten optischen Kammer (A) in der Nähe einer Ecke der lichtempfindlichen Oberfläche des dritten Sensors (Ma3) angeordnet ist, der im Bereich der Grenze zwischen der zweiten und dritten Zeile und im Bereich der Grenze der zweiten Spalte in der Nähe der dritten Spalte vorgesehen ist.

13. Kamera nach einem der vorhergehenden Ansprüche, **dadurch gekennzeichnet, dass** die zweite Kammer (B) mit einem ersten Sensor (Mb1) und mit einem zweiten Sensor (Mb2), die entlang einer ersten Spalte ausgerichtet sind, mit einem dritten Sensor (Mb3) und einem vierten Sensor (Mb4), die entlang einer zweiten Spalte ausgerichtet sind, und mit einem fünften Sensor (Mb5) und einem sechsten Sensor (Mb6), die entlang einer dritten Spalte ausgerichtet sind, versehen ist, wobei der erste Sensor (Mb1) und der fünfte Sensor (Mb5) über eine erste Zeile verteilt sind, der dritte Sensor (Mb3) auf einer zweiten Zeile, der zweite Sensor (Mb2) und der sechste Sensor (Mb6) auf einer dritten Zeile und der vierte Sensor (Mb4) auf einer vierten Zeile verteilt sind, und wobei das Zentrum (Cb) der zweiten optischen Kammer (B) in der Nähe einer Ecke der lichtempfindlichen Oberfläche des dritten Sensors (Mb3) angeordnet ist, der im Bereich der Grenze zwischen der zweiten und dritten Zeile und im Bereich der Grenze der zweiten Spalte in der Nähe der ersten Spalte vorgesehen ist.

14. Kamera nach einem der vorhergehenden Ansprüche, **dadurch gekennzeichnet, dass** die dritte Kammer (C) mit einem ersten Sensor (Mc1) und mit einem zweiten Sensor (Mc2), die entlang einer ersten Spalte ausgerichtet sind, mit einem dritten Sensor (Mc3) und einem vierten Sensor (Mc4), die entlang einer zweiten Spalte ausgerichtet sind, und mit einem fünften Sensor (Mc5) und einem sechsten Sensor (Mc6), die entlang einer dritten Spalte ausgerichtet sind, versehen ist, wobei der dritte Sensor (Mc3) in einer ersten Reihe, der erste Sensor (Mc1) und der fünfte Sensor (Mc5) in einer zweiten Reihe, der vierte Sensor (Mc4) in einer dritten Reihe und der zweite Sensor (Mc2) und der sechste Sensor (Mc6) in einer vierten Reihe angeordnet sind, wobei das Zentrum (Cc) der dritten optischen Kammer (C) in der Nähe der Mitte einer Seite der aktiven Oberfläche des Sensors (Mc4) angeordnet ist, die im Bereich der Grenze der zweiten und dritten Reihe vorgesehen ist.

## Claims

1. Camera for acquiring vertical aerial images, comprising a plurality of optical chambers (A, B, C) each with a lens and a plurality of matrix-array sensors (M), **characterized in that** it only comprises three optical chambers (A, B, C) the centres (Ca, Cb, Cc) of which are placed at the vertices of an equilateral triangle, each optical chamber (A, B, C) comprising:
- a lens with a large image circle and a focal length larger than or equal to 185 mm; and
- a plurality of matrix-array sensors (M) that are arranged staggered, each matrix-array sensor being able to capture a sub-image (SI) of a photographed zone, said sub-images (SI) being assembled by virtue of computer processing so as to obtain an image (28) of the photographed zone.

2. Camera according to Claim 1, **characterized in that**, for each optical chamber, the lens (20) has an image circle larger than 200 mm.

3. Camera according to Claim 1 or 2, **characterized in that**, for each optical chamber, the lens (20) is arranged so that the distance between the optical entrance port and the focal plane is larger than or equal to 373 mm.

4. Camera according to one of the preceding claims, **characterized in that**, for each optical chamber, the lens (20) has a modulation transfer of about 40% for a resolving power of 42 pl/mm at a distance of 110 mm from the centre of the image.

5. Camera according to one of the preceding claims, **characterized in that** each optical chamber comprises six matrix-array sensors (M).

6. Camera according to one of the preceding claims, **characterized in that** the matrix-array sensors (M) are of CCD type.

7. Camera according to Claim 6, **characterized in that** each matrix-array sensor has a diagonal of about 61.3 mm and photosites of 6 µm.

8. Camera according to Claim 6 or 7, **characterized in that** the matrix-array sensors have a ratio between the dimensions of the photosensitive area and the external dimensions of the casing of the sensor that does not exceed 1.5.

9. Camera according to one of Claims 6 to 8, **characterized in that** the matrix-array sensors are sensors of CCD type with a Bayer filter.

10. Camera according to one of the preceding claims, said camera being suitable for producing vertical aerial images and being arranged in line with an orifice (31) in a structure of an aircraft moving in a direction of advance (26), **characterized in that** the centres (Ca, Cb) of a first optical chamber (A) and of a second optical chamber (B) are placed on a straight line that is perpendicular to the direction of advance (26) and **in that** the centre (Cc) of a third chamber (C) is placed on a straight line parallel to the direction of advance (26) and passing through the centre of the orifice (C31) of the orifice (31).

11. Camera according to Claim 10, **characterized in that** the centres (Ca, Cb, Cc) of the three optical chambers (A, B, C) are placed at equal distance from the centre (C31) of the orifice (31).

12. Camera according to one of the preceding claims, **characterized in that** the first chamber (A) comprises a first sensor (Ma1) and a second sensor (Ma2), which are aligned in a first column, a third sensor (Ma3) and a fourth sensor (Ma4), which are aligned in a second column, and a fifth sensor (Ma5) and a sixth sensor (Ma6), which are aligned in a third column, the first sensor (Ma1) and the fifth sensor (Ma5) being distributed in a first row, the third sensor (Ma3) in a second row, the second sensor (Ma2) and the sixth sensor (Ma6) in a third row and the fourth sensor (Ma4) in a fourth row, the centre (Ca) of the first optical chamber (A) being placed in proximity to a corner of the photosensitive area of the third sensor (Ma3), which corner is located at the limit between the second and third rows and at the limit of the second column close to the third column.

13. Camera according to one of the preceding claims, **characterized in that** the second chamber (B) comprises a first sensor (Mb1) and a second sensor (Mb2), which are aligned in a first column, a third sensor (Mb3) and a fourth sensor (Mb4), which are aligned in a second column, and a fifth sensor (Mb5) and a sixth sensor (Mb6), which are aligned in a third column, the first sensor (Mb1) and the fifth sensor (Mb5) being distributed in a first row, the third sensor (Mb3) in a second row, the second sensor (Mb2) and the sixth sensor (Mb6) in a third row and the fourth sensor (Mb4) in a fourth row, the centre (Cb) of the second optical chamber (B) being placed in proximity to a corner of the active area of the third sensor (Mb3), which corner is located at the limit between the second and third rows and at the limit of the second column close to the first column.

14. Camera according to one of the preceding claims, **characterized in that** the third chamber (C) comprises a first sensor (Mc1) and a second sensor (Mc2), which are aligned in a first column, a third sensor (Mc3) and a fourth sensor (Mc4), which are aligned in a second column, and a fifth sensor (Mc5) and a sixth sensor (Mc6), which are aligned in a third column, the third sensor (Mc3) being in a first row, the first sensor (Mc1) and the fifth sensor (Mc5) in a second row, the fourth sensor (Mc4) in a third row and the second sensor (Mc2) and the sixth sensor (Mc6) in a fourth row, the centre (Cc) of the third optical chamber (C) being placed in proximity to the middle of one side of the active area of the sensor (Mc4), which side is located at the limit of the second and third rows.
